# EUROPEAN PATENT APPLICATION

(11) **EP 4 024 519 A1**
(43) Date of publication of application: **06.07.2022**
(21) Application number: 20942284.9
(22) Date of filing: 11.12.2020
(51) Int. Cl.: H01M 4/36

(54) **POSITIVE ELECTRODE MATERIAL, PREPARATION METHOD THEREFOR AND LITHIUM ION BATTERY**

(30) Priority: 24.06.2020 CN 202010592536
(71) Applicant: SVOLT ENERGY TECHNOLOGY CO., LTD, Changzhou, Jiangsu 213200 (CN)
(72) Inventor: QIAO, Qiqi, hangzhou, Jiangsu 213200 (CN); JIANG, Weijun, hangzhou, Jiangsu 213200 (CN); SUN, Mingzhu, hangzhou, Jiangsu 213200 (CN); XU, Xinpei, hangzhou, Jiangsu 213200 (CN); SHI, Zetao, hangzhou, Jiangsu 213200 (CN); MA, Jiali, hangzhou, Jiangsu 213200 (CN); WANG, Pengfei, hangzhou, Jiangsu 213200 (CN); CHEN, Sixian, hangzhou, Jiangsu 213200 (CN)
(74) Representative: De Bonis, Paolo
(86) International application number: PCT/CN2020/135523
(87) International publication number: WO 2021/258662

(57) **Abstract**

A positive electrode material, a preparation method therefor and a lithium ion battery. The positive electrode material has a core-shell structure, the core layer comprises a cobalt-free single crystal positive electrode active material, and the shell layer comprises LiAlO₂ and LiFePO₄. By coating the surface of the cobalt-free single crystal positive electrode active material with LiAlO₂ and LiFePO₄, the conductivity of the cobalt-free single crystal layered positive electrode material is improved, thereby improving the capacity, the rate and the cyclability of the material.

## Description

### TECHNICAL FIELD

The present disclosure relates to the technical field of batteries, for example, to a positive electrode material and a preparation method thereof, and a lithium-ion battery.

### BACKGROUND

At present, the requirements for lithium-ion power batteries in the field of new energy vehicles are increasingly stringent, such as safety performance, cycle performance, cost, etc. The cost of positive electrode material accounts for 30% to 40% of the total cost of power battery. It is necessary to reduce the cost of positive electrode material to reduce the cost of power battery.

The price fluctuation of cobalt in Nickel Cobalt Manganese (NCM) restricts the cost control of the battery, and meanwhile, metal cobalt is expensive and easy to pollute the environment. Therefore, it is necessary to reduce the cobalt content of ternary positive electrode materials or enable ternary positive electrode materials to be free of cobalt, so as to reduce the production cost.

However, the pure cobalt-free single-crystal material has poor lithium ion conductivity. The poor lithium ion conductivity restricts the intercalation and migration speed of lithium ions in the charging and discharging process of the battery, which is not conducive to the exertion of the material capacity and affects the rate capability of the material. Moreover, with the cycle, the internal resistance of the battery increases, and the battery is easy to generate heat, which causes great potential safety hazards.

CN109686970A discloses a cobalt-free lithium-rich ternary positive electrode material NMA and a preparation method thereof. The chemical formula of the cobalt-free lithium-rich ternary positive electrode material NMA is Li_{1+P}Ni_{1-x-y-z}MnₓAl_{y}M_{z}O₂, and the chemical formula of the precursor of the material is Ni_{1-x-y-z}MnₓAl_{y}M_{z}(OH)₂, where 0.03<P<0.3, 0.1<X<0.6, 0.01<Y<0.1, 0.01<Z<0.3, and M is one or more than two of Ce³⁺, Ti⁴⁺, Zr⁴⁺, and Mg²⁺. The precursor is nano sheet-shaped agglomerated particles, and the thickness of the nano sheet-shaped precursor is 30 nm to 50 nm. However, the electrochemical performance of the positive electrode material obtained by the method is poor.

CN103943844B discloses a cobalt-free lithium-rich manganese-based positive electrode material as well as a preparation method and an application thereof. The positive electrode material has a chemical formula Liᵢ₊ₓNi_{y}Mn_{0.8-y}O₂ (x is great than 0 and less than 1/3 and y is great than 0 and less than 0.8). The preparation process of the positive electrode material includes the following steps: preparing a precursor in an ethanol or de-ionized water solvent by adopting a sol-gel method, pre-sintering at the low temperature, performing ball-milling, and performing high-temperature solid-phase sintering to obtain the positive electrode material. However, the electrochemical performance of the positive electrode material obtained by the method is poor.

Therefore, it is necessary to develop a new cobalt-free material in this field, and such a material has excellent electrochemical performance, low cost, and simple preparation method, and can be commercially produced.

### SUMMARY

The present disclosure provides a positive electrode material and a preparation method thereof, and a lithium-ion battery.

The present disclosure provides a positive electrode material in an embodiment. The positive electrode material has a core-shell structure, where the core layer includes a cobalt-free single-crystal positive electrode active substance, and the shell layer includes LiAlO₂ and LiFePO₄.

In an embodiment provided by the present disclosure, with the cladding of LiAlO₂ and LiFePO₄ on the surface of the cobalt-free single-crystal positive electrode active substance, the positive electrode material improves the conductivity of the cobalt-free single-crystal layered positive electrode material, thereby improving the capacity, rate, and cycle performance of the material. The shell layer must contain both LiAlO₂ and LiFePO₄ to achieve excellent electrochemical performance. If the shell layer only contains LiAlO₂, the stability of the material cannot be significantly improved; and if the shell layer only contains LiFePO₄, the cycle performance of the material cannot be significantly improved.

In an embodiment, the content of the cobalt-free single-crystal positive electrode active substance is 98.5 wt% to 99.9 wt%, for example, 98.6 wt%, 98.8 wt%, 99.0 wt%, 99.2 wt%, 99.4 wt%, 99.5 wt%, 99.8 wt%, etc.

In an embodiment, the content of LiAlO₂ is 0.05 wt% to 0.5 wt%, for example, 0.1 wt%, 0.15 wt%, 0.2 wt%, 0.25 wt%, 0.3 wt%, 0.35 wt%, 0.4 wt%, 0.45 wt%, 0.48 wt%, etc.

In an embodiment provided by the present disclosure, the content of LiAlO₂ in the positive electrode material is 0.05 wt% to 0.5 wt%. If the content of LiAlO₂ is too much, the capacity of the obtained positive electrode material is low; and if the content of LiAlO₂ is too little, the shell layer is unevenly cladded.

In an embodiment, the content of LiFePO₄ is 0.05 wt% to 1 wt%, for example, 0.08 wt%, 0.1 wt%, 0.15 wt%, 0.2 wt%, 0.25 wt%, 0.3 wt%, 0.35 wt%, 0.4 wt%, 0.45 wt%, 0.5 wt%, 0.55 wt%, 0.6 wt%, 0.65 wt%, 0.7 wt%, 0.75 wt%, 0.8 wt%, 0.85 wt%, 0.9 wt%, 0.95 wt%, etc.

In an embodiment provided by the present disclosure, the content of LiFePO₄ in the positive electrode material is 0.05 wt% to 1 wt%. If the content of LiFePO₄ is too much, the capacity of the positive electrode material is reduced; and if the content of LiFePO₄ is too little, the positive electrode material cannot be unevenly cladded so that part of the positive electrode material is still in direct contact with the electrolyte, thereby affecting the electrochemical performance.

In an embodiment, the cobalt-free single-crystal positive electrode active substance is LiNiₓMn_{y}O₂, where x is greater than or equal to 0.45 and less than or equal to 0.95, for example, 0.5, 0.55, 0.6, 0.65, 0.68, 0.7, 0.75, 0.8, 0.85, 0.88, 0.9, etc., and y is greater than or equal to 0.05 and less than or equal to 0.55, for example, 0.1, 0.12, 0.15, 0.18, 0.2, 0.25, 0.3, 0.35, 0.38, 0.4, 0.45, 0.48, 0.5, etc.

The present disclosure provides a method for preparing a positive electrode material in an embodiment. The method includes the following step.

A cobalt-free single-crystal positive electrode active substance, a lithium salt, an aluminum-containing material, and FePO₄ are mixed and calcined to obtain a positive electrode material.

In an embodiment, the preparation method of the cobalt-free single-crystal positive electrode active substance includes the following step. A lithium salt and a cobalt-free positive electrode active substance precursor are mixed and sintered to obtain the cobalt-free single-crystal positive electrode active substance.

In an embodiment, the cobalt-free positive electrode active substance precursor has a chemical formula NiₓMn_{y}(OH)₂, where x is greater than or equal to 0.45 and less than or equal to 0.95, for example, 0.5, 0.55, 0.6, 0.65, 0.68, 0.7, 0.75, 0.8, 0.85, 0.88, 0.9, etc., and y is greater than or equal to 0.05 and less than or equal to 0.55, for example, 0.1, 0.12, 0.15, 0.18, 0.2, 0.25, 0.3, 0.35, 0.38, 0.4, 0.45, 0.48, 0.5, etc.

In an embodiment, the lithium salt includes LiOH and/or Li₂CO₃.

In an embodiment, the temperature of the sintering is 800°C to 1000°C, for example, 820°C, 850°C, 880°C, 900°C, 920°C, 950°C, 980°C, etc.

In an embodiment provided by the present disclosure, the temperature of the sintering is 800°C to 1000°C. If the temperature of the sintering is too low, the crystal structure of the material is incomplete; and if the temperature of the sintering is too high, the particle size of the material is too large, which leads to the reduction of capacity.

In an embodiment, the time of the sintering is 10 hours to 20 hours, for example, 11 hours, 12 hours, 13 hours, 14 hours, 15 hours, 16 hours, 17 hours, 18 hours, 19 hours, etc.

In an embodiment, the atmosphere of the sintering is an air atmosphere or an O₂ atmosphere.

In an embodiment, after the sintering, the method further includes the following step. The resulting product is crushed.

In an embodiment, the crushed material is sieved through a sieve with a mesh size of 300 to 400, for example, 300, 310, 320, 330, 340, 350, 360, 370, 380, 390, 400, etc.

In an embodiment, the residual alkali content of the cobalt-free single-crystal positive electrode active substance is less than or equal to 0.5 wt%, for example, 0.05 wt%, 0.08 wt%, 0.1 wt%, 0.12 wt%, 0.15 wt%, 0.18 wt%, 0.2 wt%, 0.22 wt%, 0.25 wt%, 0.28 wt%, 0.3 wt%, 0.35 wt%, 0.4 wt%, 0.45 wt%, etc.

In an embodiment, the pH value of the cobalt-free single-crystal positive electrode active substance is less than or equal to 12, for example, 7, 8, 9, 10, 11, 12, etc.

In an embodiment, the specific surface area of the cobalt-free single-crystal positive electrode active substance is less than or equal to 2 m²/g, for example, 0.5 m²/g, 0.6 m²/g, 0.8 m²/g, 1 m²/g, 1.2 m²/g, 1.4 m²/g, 1.5 m²/g, 1.6 m²/g, 1.7 m²/g, 1.8m²/g, etc.

In an embodiment, the aluminum-containing material is Al₂O₃ and/or Al(OH)₃.

In an embodiment, the mixing is mixing with stirring.

In an embodiment, the speed of the stirring is 900 rpm to 1000 rpm, for example, 910 rpm, 920 rpm, 930 rpm, 940 rpm, 950 rpm, 960 rpm, 970 rpm, 980 rpm, 990 rpm, etc.

In an embodiment, the time of the mixing is 5 minutes to 20 minutes, for example, 6 minutes, 7 minutes, 8 minutes, 9 minutes, 10 minutes, 11 minutes, 12 minutes, 13 minutes, 14 minutes, 15 minutes, 16 minutes, 17 minutes, 18 minutes, 19 minutes, 20 minutes, etc.

In an embodiment, the temperature of the calcining is 400°C to 700°C, for example, 450°C, 500°C, 550°C, 600°C, 650°C, etc.

In an embodiment provided by the present disclosure, the temperature of the calcining is 400°C to 700°C. If the temperature of the calcining is too low, the binding force between the bulk material and the cladding material is weak, and the cladding material is easy to fall off; and if the temperature of the calcining is too high, the cladding material can easily enter the bulk material (the cobalt-free single-crystal positive electrode active substance) and cannot clad the bulk material.

In an embodiment, the time of the calcining is 5 hours to 8 hours, for example, 5.2 hours, 5.5 hours, 5.8 hours, 6 hours, 6.2 hours, 6.5 hours, 6.8 hours, 7 hours, 7.2 hours, 7.5 hours, 7.8 hours, etc.

In an embodiment, after the calcining, the method further includes the following step. The product is sieved through a sieve with a mesh size of 300 to 400, for example, 300, 310, 320, 330, 340, 350, 360, 370, 380, 390, 400, etc.

In an embodiment, the method includes the following steps.
(1) A lithium salt and a cobalt-free positive electrode active substance precursor are mixed with stirring for 5 minutes to 15 minutes at a rotation speed of 800 rpm to 900 rpm.
(2) Under an atmosphere of air or O₂, the product obtained in step (1) is sintered at 800°C to 1000°C for 10 hours to 20 hours, the sintered product is crushed and milled through a roll crusher and a jet mill, and the milled material is sieved through a sieve with a mesh size of 300 to 400 to obtain a cobalt-free single-crystal positive electrode active substance.
(3) The cobalt-free single-crystal positive electrode active substance, a lithium salt, an aluminum-containing material, and FePO₄ are mixed with stirring at a stirring speed of 900 rpm to 1000 rpm for 5 minutes to 20 minutes, calcined at 400°C to 700°C for 5 hours to 8 hours, and sieved through a sieve with a mesh size of 300 to 400 to obtain a positive electrode material.

In the positive electrode material, the content of the cobalt-free single-crystal positive electrode active substance is 98.5 wt% to 99.9 wt%, the content of LiAlO₂ is 0.05 wt% to 0.5 wt%, and the content of LiFePO₄ is 0.05 wt% to 1 wt%.

The present disclosure provides a lithium-ion battery in an embodiment. The lithium-ion battery includes the preceding positive electrode material.

### BRIEF DESCRIPTION OF DRAWINGS

The drawings are used to provide a further understanding of the technical solutions of the present disclosure, constitute a part of the description, explain the technical solutions of the present disclosure in conjunction with the embodiments of the present application, and do not limit the technical solutions of the present disclosure.
FIGs. 1 and 2 show SEM diagrams of a positive electrode material prepared in an example of the present disclosure;
FIGs. 3 and 4 show SEM diagrams of a positive electrode material prepared in a comparative example of the present disclosure;
FIG. 5 shows a comparison diagram of first charge-discharge curves of the positive electrode material prepared in an example and the positive electrode material prepared in a comparative example in the present disclosure;
FIG. 6 shows a comparison diagram of cycle performance of the positive electrode material prepared in an example and the positive electrode material prepared in a comparative example in the present disclosure; and
FIG. 7 shows a comparison diagram of rate performance of the positive electrode material prepared in an example and the positive electrode material prepared in a comparative example in the present disclosure.

### DETAILED DESCRIPTION

The technical solutions of the present disclosure will be further described below in conjunction with the drawings and specific examples.

### Example 1

A method for preparing a positive electrode material includes the following steps.
(1) LiOH and a cobalt-free positive electrode active substance precursor Ni_{0.75}Mn_{0.25}(OH)₂ were mixed with stirring at a stirring speed of 900 rpm for 10 minutes, where the ratio of the molar amount of element Li in the LiOH to the total molar amount of metal elements in the cobalt-free positive electrode active material precursor was 1.05.
(2) Under an atmosphere of air, the product obtained in step (1) was sintered at 900°C for 15 hours, the sintered product was crushed and milled through a roll crusher and a jet mill, and the milled material was sieved through a sieve with a mesh size of 400 to obtain a cobalt-free single-crystal positive electrode active substance.
(3) The cobalt-free single-crystal positive electrode active substance, LiOH, Al₂O₃, and FePO₄ were mixed with stirring at a stirring speed of 1000 rpm for 10 minutes, where the mass ratio of the cobalt-free single-crystal positive electrode active substance, LiOH, Al₂O₃, and FePO₄ was 99.2:0.18:0.23:0.48, then calcined at 600°C for 6 hours, and sieved through a sieve with a mesh size of 400 to obtain a positive electrode material.

In the positive electrode material prepared in this example, the content of the cobalt-free single-crystal positive electrode active substance was 99.2 wt%, the content of LiAlO₂ was 0.3 wt%, and the content of LiFePO₄ was 0.5 wt%.

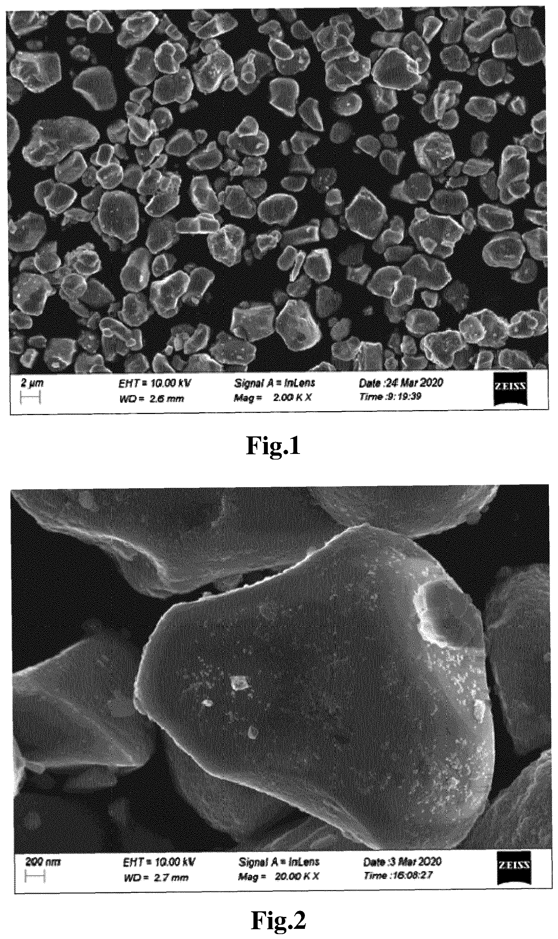

FIGs. 1 and 2 are SEM diagrams of the positive electrode material prepared in this example. It can be seen from the diagrams that the positive electrode material prepared in this example has high particle size uniformity.

### Example 2

A method for preparing a positive electrode material includes the following steps.
(1) LiOH and a cobalt-free positive electrode active substance precursor Ni_{0.75}Mn_{0.25}(OH)₂ were mixed with stirring at a stirring speed of 800 rpm for 15 minutes, where the ratio of the molar amount of element Li in the LiOH to the total molar amount of metal elements in the cobalt-free positive electrode active substance precursor was 1.05.
(2) Under an atmosphere of air, the product obtained in step (1) was sintered at 1000°C for 10 hours, the sintered product was crushed and milled through a roll crusher and a jet mill, and the milled material was sieved through a sieve with a mesh size of 300 to obtain a cobalt-free single-crystal positive electrode active substance.
(3) The cobalt-free single-crystal positive electrode active substance, LiOH, Al₂O₃, and FePO₄ were mixed with stirring at a stirring speed of 1000 rpm for 5 minutes, where the mass ratio of the cobalt-free single-crystal positive electrode active substance, LiOH, Al₂O₃, and FePO₄ was 98.8:0.27:0.38:0.58, then calcined at 700°C for 5 hours, and sieved through a sieve with a mesh size of 300 to obtain a positive electrode material.

In the positive electrode material prepared in this example, the content of the cobalt-free single-crystal positive electrode active substance was 98.8 wt%, the content of LiAlO₂ was 0.5 wt%, and the content of LiFePO₄ was 0.7 wt%.

### Example 3

A method for preparing a positive electrode material includes the following steps.
(1) LiOH and a cobalt-free positive electrode active substance precursor Ni_{0.75}Mn_{0.25}(OH)₂ were mixed with stirring at a stirring speed of 900 rpm for 5 minutes, where the ratio of the molar amount of element Li in the LiOH to the total molar amount of metal elements in the cobalt-free positive electrode active substance precursor was 1.05.
(2) Under an atmosphere of O₂, the product obtained in step (1) was sintered at 800°C for 20 hours, the sintered product was crushed and milled through a roll crusher and a jet mill, and the milled material was sieved through a sieve with a mesh size of 300 to obtain a cobalt-free single-crystal positive electrode active substance.
(3) The cobalt-free single-crystal positive electrode active substance, LiOH, Al₂O₃, and FePO₄ were mixed with stirring at a stirring speed of 900 rpm for 20 minutes, where the mass ratio of the cobalt-free single-crystal positive electrode active substance, LiOH, Al₂O₃, and FePO₄ was 99.6:0.09:0.12:0.24, then calcined at 400°C for 8 hours, and sieved through a sieve with a mesh size of 300 to obtain a positive electrode material.

In the positive electrode material prepared in this example, the content of the cobalt-free single-crystal positive electrode active substance was 99.6 wt%, the content of LiAlO₂ was 0.15 wt%, and the content of LiFePO₄ was 0.25 wt%.

### Example 4

The difference between Example 4 and Example 1 is that the addition amounts of Al₂O₃ and FePO₄ in step (3) were changed so that in the obtained positive electrode material, the content of the cobalt-free single-crystal positive electrode active substance was 99.2 wt%, the content of LiAlO₂ was 0.05 wt%, and the content of LiFePO₄ was 0.75 wt%.

### Example 5

The difference between Example 5 and Example 1 is that the addition amounts of Al₂O₃ and FePO₄ in step (3) were changed so that in the obtained positive electrode material, the content of the cobalt-free single-crystal positive electrode active substance was 99.2 wt%, the content of LiAlO₂ was 0.5 wt%, and the content of LiFePO₄ was 0.3 wt%.

### Example 6

The difference between Example 6 and Example 1 is that the addition amounts of Al₂O₃ and FePO₄ in step (3) were changed so that in the obtained positive electrode material, the content of the cobalt-free single-crystal positive electrode active substance was 99.2 wt%, the content of LiAlO₂ was 0.02 wt%, and the content of LiFePO₄ was 0.78 wt%.

### Example 7

The difference between Example 7 and Example 1 is that the addition amounts of Al₂O₃ and FePO₄ in step (3) were changed so that in the obtained positive electrode material, the content of the cobalt-free single-crystal positive electrode active substance was 99.2 wt%, the content of LiAlO₂ was 0.78 wt%, and the content of LiFePO₄ was 0.02 wt%.

### Example 8

The difference between Example 8 and Example 1 is that the addition amounts of Al₂O₃ and FePO₄ in step (3) were changed so that in the obtained positive electrode material, the content of the cobalt-free single-crystal positive electrode active substance was 98.5 wt%, the content of LiAlO₂ was 0.2 wt%, and the content of LiFePO₄ was 1.3 wt%.

### Example 9

The difference between Example 9 and Example 1 is that the temperature of the calcining in step (3) was 300°C.

### Example 10

The difference between Example 10 and Example 1 is that the temperature of the calcining in step (3) was 800°C.

### Comparative Example 1

The cobalt-free single-crystal positive electrode active substance obtained in step (2) in Example 1 was taken as the positive electrode material, that is, there was no cladding layer of LiAlO₂ and LiFePO₄.

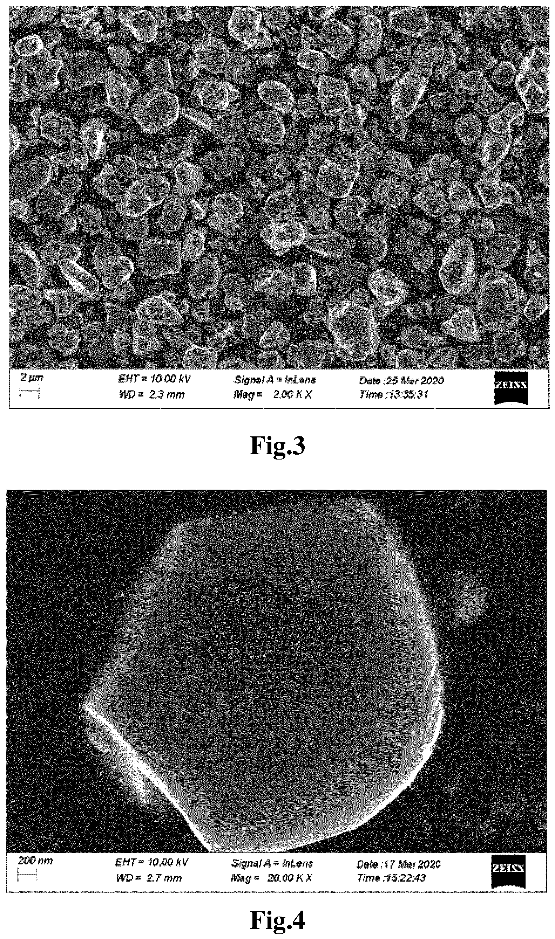

FIGs. 3 and 4 are SEM diagrams of the positive electrode material prepared in this comparative example. In conjunction with FIG. 1 and FIG. 2, it can be seen that the morphology and primary particle size were basically unchanged before and after the cladding. The difference is that the surface of the material before the cladding (this comparative example) was relatively smooth, and the surface of the sample after the cladding (Example 1) had obvious claddings.

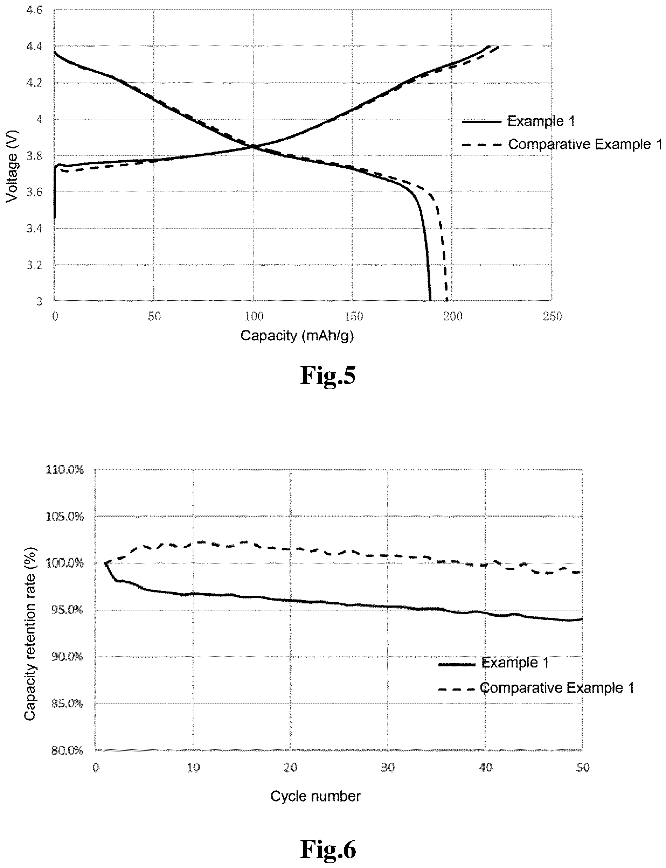

FIG. 5 shows a comparison diagram of first charge-discharge curves of the positive electrode material prepared in Example 1 and the positive electrode material prepared in this comparative example in the present disclosure. It can be seen from the figure that the charge-discharge specific capacities at the first cycle at 0.1 C of the positive electrode material without cladding (the material in this comparative example) were 219.2 mAh/g and 189.2 mAh/g, respectively, and the first-cycle efficiency was 86.3%, and the charge-discharge specific capacities at the first cycle at 0.1 C of the positive electrode material with cladding (the material in Example 1) were 224.3 mAh/g and 197.7 mAh/g, respectively, and the first-cycle efficiency was 88.1%.

Therefore, the cladding is beneficial to improve the capacity and the first-cycle efficiency of cobalt-free single-crystal layered positive electrode materials.

FIG. 6 shows a comparison diagram of cycle performance of the positive electrode material prepared in Example 1 and the positive electrode material prepared in this comparative example in the present disclosure. It can be seen from the figure that the capacity retention rate of the material without cladding (in this comparative example) at 1 C after 50 cycles was 94.0%, and the capacity retention rate of the material with cladding (in Example 1) at 1 C after 50 cycles was 99.1%. The cycle performance of the material with cladding was improved by 5.1%.

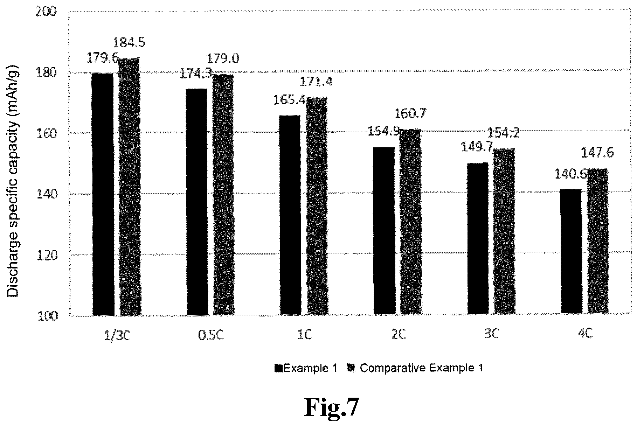

FIG. 7 shows a comparison diagram of rate performance of the positive electrode material prepared in Example 1 and the positive electrode material prepared in this comparative example in the present disclosure (in the figure, the horizontal axis is the discharge rate). It can be seen from the test results that the rate performance of the material cladded with LiAlO₂ and LiFePO₄ was improved to some extent. For example, at the rate of 2 C, the discharge specific capacity of the material without cladding (the material in this comparative example) was only 154.9 mAh/g, and the discharge specific capacity of the material with cladding (the material in Example 1) reached 160.7 mAh/g. At the rate of 4 C, the discharge specific capacity of the material without cladding (the material in this comparative example) was only 140.6 mAh/g, and the discharge specific capacity of the material with cladding (the material in Example 1) reached 147.6 mAh/g. The reason for the improvement of the rate performance in Example 1 is that the ionic conductivity of LiAlO₂ and LiFePO₄ is great, and the electrochemical activity of the cobalt-free single-crystal layered positive electrode material can be improved after cladded, thereby improving the rate performance of the material.

### Comparative Example 2

The difference between Comparative Example 2 and Example 1 is that Al₂O₃ in step (3) was substituted with an equal amount of FePO₄, that is, there was no LiAlO₂ in the product.

### Comparative Example 3

The difference between Comparative Example 3 and Example 1 is that FePO₄ in step (3) was substituted with an equal amount of Al₂O₃, that is, there was no LiFePO₄ in the product.

### Performance Test

The positive electrode materials prepared in Examples and Comparative Examples in the present disclosure were assembled into batteries, respectively.

The positive electrode material, conductive carbon black, and a binder polyvinylidene fluoride (PVDF) were mixed at a mass ratio of 90:5:5. The mixture was mixed with N-methylpyrrolidone (NMP) as the solvent and then coated on an aluminum foil. The coated aluminum foil was subjected to vacuum drying at 90°C to obtain a positive pole piece. The negative pole piece (lithium piece), the positive pole piece, electrolyte (1 mol/L lithium hexafluorophosphate LiPF₆, vinyl carbonate EC : methyl ethyl carbonate EMC = 1:1), and a separator were assembled into a battery.
(1) The first-cycle charge specific capacity and first-cycle efficiency test: the obtained battery was charged and discharged at 25±2°C, with a charge-discharge voltage of 3.0 V to 4.4 V and current densities of 0.1 C/0.1 C (where 0.1 C was the current density for charging and 0.1 C for discharging). The test results are shown in Table 1.
(2) The 50-cycle cycle performance test: the obtained battery was charged and discharged at 25±2°C, with a charge-discharge voltage of 3.0 V to 4.4 V and current densities of 0.5 C/1 C (where 0.5 C was the current density for charging and 1 C for discharging). The test results are shown in Table 1.
(3) The rate performance test: the obtained batteries obtained in Example 1 and Comparative Example 1 were charged and discharged at 25±2°C, respectively, with a charge-discharge voltage of 3.0 V to 4.4 V, and the discharge specific capacity test was performed at 0.3C, 0.5C, 1C, 2C, 3C, and 4C, respectively. The test results are shown in Table 1.

**Table 1**

| | First-cycle charge specific capacity (mAh/g) | First-cycle efficiency (%) | 50-cycle cycle performance (%) |
|---|---|---|---|
| Example 1 | 224.3 | 88.1 | 99.1 |
| Example 2 | 222.5 | 87.9 | 99.8 |
| Example 3 | 228.9 | 87.5 | 97.9 |
| Example 4 | 225.3 | 87.2 | 98.6 |
| Example 5 | 223.4 | 87.4 | 98.2 |
| Example 6 | 221.8 | 87.1 | 97.2 |
| Example 7 | 220.9 | 86.9 | 97.3 |
| Example 8 | 219.8 | 86.7 | 97.1 |
| Example 9 | 229.7 | 88.0 | 96.8 |
| Example 10 | 218.5 | 86.5 | 100.2 |
| Comparative Example 1 | 219.2 | 86.3 | 94.0 |
| Comparative Example 2 | 221.6 | 87.1 | 95.4 |
| Comparative Example 3 | 222.3 | 87.5 | 96.2 |

**Table 2**

| | 0.3C (mAh/g) | 0.5C (mAh/g) | 1C (mAh/g) | 2C (mAh/g) | 3C (mAh/g) | 4C (mAh/g) |
|---|---|---|---|---|---|---|
| Example 1 | 184.5 | 179.0 | 171.4 | 160.7 | 154.2 | 147.6 |
| Comparative Example 1 | 179.6 | 174.3 | 165.4 | 154.9 | 149.7 | 140.6 |

It can been seen from the comparison between Example 1 and Examples 6 to 8 that when the cladding amount of LiAlO₂ or LiFePO₄ in Examples 6 and 7 is too low, the cladding layer cannot be uniformly cladded on the surface of the bulk material (cobalt-free single-crystal positive electrode active substance), resulting in poor cycle performance; and when the cladding amount of LiFePO₄ in Example 8 is excessive, the cladding layer is too thick, resulting in low material capacity and poor cycle performance.

It can be seen from the compassion between Example 1 and Examples 9 and 10 that when the calcination temperature is too low, the binding force between the cladding layer and the bulk material is poor, resulting in poor cycle performance; and when the calcination temperature is too high, the cladding layer easily enters the bulk material, resulting in low capacity.

It can be seen from the compassion between Example 1 and Comparative Example 1 that the capacity, first-cycle efficiency, and cycle performance of the material after cladded with LiAlO₂ and LiFePO₄ are improved. It can be seen from the compassion between Example 1 and Comparative Examples 2 and 3 that the cycle performance of the material only cladded with one of LiAlO₂ and LiFePO₄ is worse than the cycle performance of the material cladded with both LiAlO₂ and LiFePO₄.

## Claims

1. A positive electrode material comprising a core-shell structure, wherein the core layer comprises a cobalt-free single-crystal positive electrode active substance, and the shell layer comprises LiAlO₂ and LiFePO₄.

2. The positive electrode material according to claim 1, wherein the content of the cobalt-free single-crystal positive electrode active substance is 98.5 wt% to 99.9 wt%.

3. The positive electrode material according to claim 1 or 2, wherein the content of LiAlO₂ is 0.05 wt% to 0.5 wt%.

4. The positive electrode material according to any one of claims 1 to 3, wherein the content of LiFePO₄ is 0.05 wt% to 1 wt%.

5. The positive electrode material according to any one of claims 1 to 4, wherein the cobalt-free single-crystal positive electrode active substance is LiNiₓMn_{y}O₂, wherein x is greater than or equal to 0.45 and less than or equal to 0.95, and y is greater than or equal to 0.05 and less than or equal to 0.55.

6. A method for preparing the positive electrode material according to any one of claims 1 to 5, comprising the following step:
a cobalt-free single-crystal positive electrode active substance, a lithium salt, an aluminum-containing material, and FePO₄ are mixed and calcined to obtain a positive electrode material.

7. The method according to claim 6, wherein the preparation method of the cobalt-free single-crystal positive electrode active substance comprises the following step: a lithium salt and a cobalt-free positive electrode active substance precursor are mixed and sintered to obtain the cobalt-free single-crystal positive electrode active substance.

8. The method according to claim 7, wherein the cobalt-free positive electrode active substance precursor has a chemical formula NiₓMn_{y}(OH)₂, wherein x is greater than or equal to 0.45 and less than or equal to 0.95, and y is greater than or equal to 0.05 and less than or equal to 0.55.

9. The method according to any one of claims 6 to 8, wherein the lithium salt comprises LiOH and/or Li₂CO₃.

10. The method according to any one of claims 7 to 9, wherein the temperature of the sintering is 800°C to 1000°C.

11. The method according to any one of claims 7 to 10, wherein the time of the sintering is 10 hours to 20 hours.

12. The method according to any one of claims 7 to 11, wherein the atmosphere of the sintering is an air atmosphere or an O₂ atmosphere.

13. The method according to any one of claims 7 to 12, wherein after the sintering, further comprising: the resulting product is crushed.

14. The method according to claim 13, wherein the crushed material is sieved through a sieve with a mesh size of 300 to 400.

15. The method according to any one of claims 6 to 14, wherein the residual alkali content of the cobalt-free single-crystal positive electrode active substance is less than or equal to 0.5 wt%.

16. The method according to any one of claims 6 to 15, wherein the pH value of the cobalt-free single-crystal positive electrode active substance is less than or equal to 12.

17. The method according to any one of claims 6 to 16, wherein the specific surface area of the cobalt-free single-crystal positive electrode active substance is less than or equal to 2 m²/g.

18. The method according to any one of claims 6 to 17, wherein the aluminum-containing material is Al₂O₃ and/or Al(OH)₃.

19. The method according to any one of claims 6 to 18, wherein the mixing is mixing with stirring.

20. The method according to claim 19, wherein the speed of the stirring is 900 rpm to 1000 rpm.

21. The method according to any one of claims 6 to 20, wherein the time of the mixing is 5 minutes to 20 minutes.

22. The method according to any one of claims 6 to 21, wherein the temperature of the calcining is 400°C to 700°C.

23. The method according to any one of claims 6 to 22, wherein the time of the calcining is 5 hours to 8 hours.

24. The method according to any one of claims 6 to 23, wherein after the calcining, further comprising: the product is sieved through a sieve with a mesh size of 300 to 400.

25. The method according to any one of claims 6 to 24, comprising the following steps:
(1) a lithium salt and a cobalt-free positive electrode active substance precursor are mixed with stirring for 5 minutes to 15 minutes at a rotation speed of 800 rpm to 900 rpm;
(2) under an atmosphere of air or O₂, the product obtained in step (1) is sintered at 800°C to 1000°C for 10 hours to 20 hours, the sintered product is crushed and milled through a roll crusher and a jet mill, and the milled material is sieved through a sieve with a mesh size of 300 to 400 to obtain a cobalt-free single-crystal positive electrode active substance; and
(3) the cobalt-free single-crystal positive electrode active substance, a lithium salt, an aluminum-containing material, and FePO₄ are mixed with stirring at a stirring speed of 900 rpm to 1000 rpm for 5 minutes to 20 minutes, calcined at 400°C to 700°C for 5 hours to 8 hours, and sieved through a sieve with a mesh size of 300 to 400 to obtain a positive electrode material;
wherein in the positive electrode material, the content of the cobalt-free single-crystal positive electrode active substance is 98.5 wt% to 99.9 wt%, the content of LiAlO₂ is 0.05 wt% to 0.5 wt%, and the content of LiFePO₄ is 0.05 wt% to 1 wt%.

26. A lithium-ion battery, comprising the positive electrode material according to any one of claims 1 to 15.
